(19) Europäisches Patentamt
European Patent Office
Office européen des brevets

(11) Numéro de publication: **0 031 267**
**B1**

(12) # FASCICULE DE BREVET EUROPEEN

(45) Date de publication du fascicule du brevet: **18.07.84**

(51) Int. Cl.³: **C 25 C 7/02**, C 25 B 11/12, C 02 F 1/46

(21) Numéro de dépôt: **80401715.0**

(22) Date de dépôt: **01.12.80**

(54) **Electrode poreuse percolante fibreuse modifiée en carbone ou graphite et son application à la réalisation de réactions électrochimiques.**

(30) Priorité: **18.12.79 FR 7930929**

(43) Date de publication de la demande:
**01.07.81 Bulletin 81/26**

(45) Mention de la délivrance du brevet:
**18.07.84 Bulletin 84/29**

(84) Etats contractants désignés:
**BE DE GB NL**

(56) Documents cités:
**FR - A - 2 190 934**
**US - A - 3 799 852**
**US - A - 3 829 327**

**JOURNAL OF APPLIED ELECTROCHEMISTRY vol. 9, no. 4, juillet 1979 E. SUTZKOVER: "Pyrolytically coated carbon cloth electrodes", pages 495-500**

(73) Titulaire: **SOCIETE NATIONALE ELF AQUITAINE (PRODUCTION)**
**Tour Aquitaine**
**F-92400 Courbevoie (FR)**

(72) Inventeur: **Astruc, Michel**
**6, Rue Jean Vilar**
**F-64000 Pau (FR)**
Inventeur: **Guyomar, Pierre-Yves**
**"Le Clos du Moulin"Le Petit Pont**
**F-22440 Ploufragan (FR)**
Inventeur: **Lestrade, Catherine**
**4, Rue des Merlots**
**F-33360 Latresne (FR)**

(74) Mandataire: **Boillot, Marc**
**SOCIETE NATIONALE ELF AQUITAINE**
**Département Propriété Industrielle Tour Aquitaine - Cedex No 4**
**F-92080 Paris la Défense (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**Description**

L'invention a pour objet une électrode poreuse percolante fibreuse modifiée en carbone ou graphite. Elle se rapporte encore à l'application d'une telle électrode à la réalisation de réactions électrochimiques et en particulier à l'électrodéposition de métaux contenus sous la forme d'ions dans divers liquides industriels. Elle concerne enfin les réacteurs électrochimiques à électrodes poreuses percolantes pour lesquels les électrodes poreuses percolantes sont du type de ladite électrode poreuse percolante fibreuse modifiée.

Le traitement des effluents industriels aqueux renfermant de faibles concentrations de métaux, notamment de métaux lourds, sous la forme d'ions en vue de récupérer lesdits métaux avant le rejet de ces effluents dans le milieu naturel, est devenu une nécessité d'une part du fait du danger que représentent certains ions métalliques pour la faune et la flore et d'autre part par suite du coût toujours croissant de ces métaux.

On a proposé de nombreuses méthodes de traitement d'effluents industriels aqueux pour en récupérer les métaux lourds qu'ils peuvent contenir en faibles concentrations sous la forme d'ions, et parmi elles des méthodes électrolytiques utilisant des électrodes à grande surface spécifique appelées électrodes poreuses percolantes. De telles électrodes se présentent sous la forme d'une matrice poreuse en un matèriau conducteur ou en un mélange d'un matériau conducteur et d'un matériau non conducteur. Lors de la mise en oeuvre du traitement électrolytique de l'effluent renfermant les ions métalliques que l'on veut éliminer, l'électrode poreuse percolante est opposée à une contre-électrode et l'effluent à traiter, qui joue le rôle d'électrolyte, est amené à percoler à travers l'électrode poreuse percolante. La réaction électrochimique, en l'occurrence la réduction des ions métalliques en métal, due à la différence de potentiel entre la matrice de l'électrode poreuse et la solution qui est en relation avec la différence de potentiel établie entre l'électrode poreuse percolante et la contre-électrode, a lieu au sein même de ladite électrode poreuse percolante.

Parmi les différents types d'électrodes poreuses percolantes décrites dans la littérature, on trouve des électrodes poreuses percolantes à structure fibreuse en carbone ou graphite qui réunissent les divers avantages des électrodes poreuses percolantes et en outre sont d'un coût notablement moins élevé que les électrodes poreuses percolantes à structure non fibreuse. Les électrodes poreuses percolantes fibreuses connues en carbone ou graphite sont par exemple constituées de fibres de carbone agencées de manière spécifique (brevet américain No. 4.046.663) ou encore peuvent consister en un tissu de graphite (D. Yaniv et M. Ariel: "Electrodeposition and Stripping at Graphite Cloths Electrodes", Journal of Electroanalytical Chemistry, 79 (1977), pages 159 à 167).

Les inconvénients des électrodes poreuses percolantes fibreuses en carbone ou graphite résident dans le fait qu'elles donnent des résultats n'ayant pas une reproductibilité satisfaisante et des rendements généralement faibles.

L'invention propose une électrode poreuse percolante fibreuse modifiée en carbone ou graphite qui permet de pallier les inconvénients précités et reste d'un coût comparable à celui de l'électrode poreuse percolante correspondante non modifiée.

L'électrode poreuse percolante fibreuse suivant l'invention est du type comportant une matrice poreuse fibreuse en carbone ou graphite et elle se caractérise en ce que ladite matrice est une matrice modifiée qui résulte de l'imprégnation d'une matrice poreuse fibreuse en carbone ou graphite par une solution renfermant 0,01% à 1% en poids d'un agent tensio-actif, de telle sorte que ladite matrice modifiée présente à l'état mouillé une densité apparente par rapport à l'eau ayant une valeur comprise entre 1,6 et 3 fois la valeur de la densité apparente par rapport à l'eau de la matrice poreuse fibreuse non modifiée correspondant à l'état mouillé.

De préférence, la matrice poreuse fibreuse modifiée en carbone ou graphite de l'électrode poreuse percolante fibreuse possède à l'état mouillé une densité apparent par rapport à l'eau ayant une valeur allant de 1,8 à 2,7 fois la valeur de la densité apparente par rapport à l'eau de la matrice poreuse fibreuse non modifiée correspondante à l'état mouillé.

Dans cette description et les revendications associées, on entend par "densité apparente par rapport à l'eau de la matrice poreuse fibreuse à l'état mouillé" le rapport de la masse d'un certain volume de la matrice poreuse fibreuse, après immersion dans l'eau pendant une durée Δ comprise entre 1 et 2 minutes, à la masse du même volume d'eau.

Cette densité apparent est obtenue à partir d'une méthode par pesée par la relation

$$\delta = \frac{M_3 - M_1}{\frac{D}{d} \cdot M_2} + 1$$

dans laquelle:

— $M_1$ représente la masse en grammes d'un récipient de volume $v$ rempli d'eau,
— $M_2$ est la masse en grammes d'un certain volume $v$ de la matrice poreuse fibreuse sèche,

— $M_3$ est la masse en grammes du récipient de volume contenant le volume $v$ de matrice et de l'eau pour occuper entièrement le volume $v$, et

— D et d représentent respectivement la densité de l'eau et la densité de la matrice poreuse fibreuse sèche.

Si l'on désigne par $\delta_M$ et $\delta_0$ les densités apparentes par rapport à l'eau de la matrice poreuse fibreuse modifiée mouillée et de la matrice poreuse fibreuse non modifiée mouillée déterminées comme indiqué plus haut, le rapport $\delta_M$:$\delta_0$ possède, suivant l'invention, une valeur comprise entre 1,6 et 3 et de préférence allant de 1,8 à 2,7.

Par l'expression "un agent tensio-actif" on entend aussi bien un agent tensio-actif qu'un mélange d'agents tensio-actifs.

La technique d'imprégnation de la matrice fibreuse par l'agent tensio-actif n'est pas critique. On peut par exemple réaliser cette imprégnation par immersion de la matrice poreuse fibreuse dans une solution aqueuse renfermant l'agent tensio-actif en concentration appropriée ou encore pulvériser ladite solution sur la matrice fibreuse, puis or élimine l'excès éventuel d'agent tensio-actif par un lavage rapide de la matrice imprégnée, et l'on sèche, si besoin est, la matrice imprégnée obtenue.

Comme défini plus haut la concentration en agent tensio-actif de la solution d'agent tensio-actif utilisée pour imprégner la matrice fibreuse poreuse se situe entre 0,01% et 1% du poids de ladite solution. Des solutions aqueuses de l'agent tensio-actif renfermant plus de 1% en poids d'agent tensio-actif n'apportent pas d'améliorations supplémentaires et en outre la quantité d'agent tensio-actif déposée à partir de telles solutions au sein de la matrice poreuse fibreuse provoque un moussage gênant lorsque l'électrode poreuse percolante modifiée est mise en contact avec l'effluent à traiter électrochimiquement.

Les agents tensio-actifs utilisables pour constituer l'agent d'imprégnation de la matrice fibreuse de l'électrode poreuse percolante peuvent être des agents tensio-actifs anioniques, cationiques, non ioniques, ou même amphotères. Parmi les agents tensio-actifs anioniques on peut citer les glycérides sulfatés, les esters sulfatés et par exemple les oléates d'alcoyle sulfatés comme l'oléate de butyle sulfaté, les oléfines à longues chaînes sulfatées, les sulfates d'alcools gras saturés ou non saturés et par exemple le laurylsulfate de sodium, le cétyl sulfate de sodium, l'éthyl-2 hexyl sulfate de sodium, le sulfate de sodium de l'alcool oléique, les alcane sulfonates de métaux alcalins et notamment les alcanesulfonates de sodium, les sulfosuccinates, les alcoylarylsulfonates de métaux alcalins et notamment les alcoylnaphtalènesulfonates de sodium et alcoylbenzène sulfonates de sodium comme par exemple le butylnaphtalène sulfonate de sodium et le xylènesulfonate de sodium. Les tensio-actifs cationiques peuvent être choisis, entre autres, parmi les chlorhydrates d'amines grasses ou encore parmi les chlorures d'ammonium quaternaires d'amines à longues chaînes comme par exemple le chlorure de lauryltriméthylammonium ou le chlorure de laurylpyridinium. Parmi les tensio-actifs non ioniques on peut citer par exemple les produits d'addition de l'oxyde d'éthylène sur des alcools ou des phénols et notamment les éthers polyoxyéthyléniques des alcools gras supérieurs et les éthers polyoxyéthyléniques des alcoylphénols, ou encore les esters d'acides gras des polyoxyalcoylèneglycols et en particulier les esters d'acides gras des polyoxyéthylèneglycols. A titre d'agents tensio-actifs amphotères on peut utiliser par exemple les acides-amines et les bétaïnes présentant des restes alcoyles à longue chaîne, ou encore les sulfates d'amines grasses insaturées ou hydroxylées et par exemple l'oléylamine sulfatée ou l'hydroxyoctadécylamine sulfatée.

De préférence l'agent tensio-actif imprégnant la matrice fibreuse de l'électrode poreuse percolante présente un nombre représentatif de sa balance hydrophile/lipophile (en anglais "HLB number") compris entre 5 et 20 et situé plus particulièrement entre 10 et 16.

La matrice poreuse fibreuse en carbone ou graphite à partir de laquelle on forme, par exemple par imprégnation au moyen d'un agent tensio-actif, la matrice poreuse fibreuse modifiée de l'électrode poreuse percolante suivant l'invention peut être formée par toute structure fibreuse en carbone ou graphite ayant une porosité suffisante pour qu'une solution puisse percoler à travers cette structure dans les conditions habituellement requises pour les électrodes poreuses percolantes. Ladite matrice poreuse fibreuse peut consister par exemple en une structure de fibres de carbone, notamment du type de celle décrite dans le brevet américain No. 4.046.663, ou en un tissu tissé ou non tissé de carbone ou de graphite, ou encore en bourre de fibres de carbone ou de graphite. De préférence ladite matrice fibreuse de l'électrode poreuse percolante est un feutre de carbone ou de graphite.

L'électrode poreuse percolante modifiée suivant l'inventoin peut se présenter sous la forme d'une plaque ou d'une plaquette, d'un disque, ou encore avoir une forme annulaire ou toute autre forme souhaitée.

L'électrode poreuse percolante modifiée suivant l'invention trouve en particulier une application comme électrode poreuse percolante pour la réalisation de réactions électrochimiques, et plus particulièrement pour effectuer des réactions électrochimiques en phase aqueuse, en faisant appel au processus dans lequel une solution renfermant la ou les espèces susceptibles de réagir par voie électrochimique, est amenée à percoler à travers l'électrode poreuse, ladite solution étant traversée par un courant électrique résultant de 'létablissement d'une différence de potentiel entre ladite électrode

poreuse percolante et une contre-électrode, qui peut être également une électrode poreuse percolante, en contact avec la solution.

Le processus précité faisant appel à l'électrode poreuse percolante suivant l'invention peut être utilisé en particulier pour la récupération par électro-déposition des métaux, notamment cuivre, plomb, argent, or, mercure, cadmium, nickel, contenus en concentrations variables sous la forme d'ions dans diverses solutions, par exemple en faibles concentrations dans des effluents industriels ou en concentrations plus élevées dans des solutions de traitements hydrométallurgiques. On peut également employer le processus susmentionné pour la destruction de certains polluants organiques ou de certains anions comme les ions cyanures contenus dans les eaux résiduaires de certains traitements, ou même pour effectuer des synthèses de produits organiques comportant une ou plusieurs réactions électrochimiques.

Les cellules ou réacteurs électrochimiques utilisables pour effectuer de telles réactions électrochimiques suivant l'invention sont du type des cellules ou réacteurs électrochimiques à électrodes poreuses percolantes fixes connus dans l'art, pour lesquels toutefois l'électrode poreuse percolante est une électrode poreuse percolante modifiée suivant l'invention. De telles cellules ou réacteurs électrochimiques comprennent généralement une enceinte munie d'une entrée et d'une sortie pour la solution à traiter, une électrode poreuse percolante fixe disposée dans ladite enceinte au voisinage de l'entrée de telle sorte que le liquide amené à l'entrée de l'enceinte pénètre dans cette dernière uniquement par percolation à travers ladite électrode, une contre-électrode placée dans l'enceinte entre l'électrode poreuse percolante et la sortie de ladite enceinte, des moyens pour établir une différence de potentiel entre lesdites électrodes et des moyens pour faire circuler la solution à traiter depuis l'entrée à la sortie de l'enceinte.

Dans ces cellules ou réacteurs électrochimiques l'électrode poreuse percolante et la contre-électrode, qui peut être également une électrode poreuse percolante, peuvent être disposées de telle sorte que les lignes de courant dans la solution entre les électrodes soient parallèles à la direction d'écoulement de ladite solution ou encore que lesdites lignes de courant soient sensiblement orthogonales à la direction d'écoulement de la solution. Par exemple on peut utiliser des cellules ou réacteurs électrochimiques analogues à ceux représentés schématiquement dans le brevet américain No. 4.046.663, ou dans l'article de G. A. Carlson et E. E. Estep intitulé: "Porous Cathode Cell for Metals Removal from Aqueous Solutions" et publié dans Electrochemical Contributions to Environmental Protection, 1972, pages 159 à 167, ou encore dans l'article de G. A. Carlson, E. E. Estep, et D. Jacqueau intitulé: "Porous Cathode Cell for Sodium Hydroxide Purification" et publié dans la revue Chemie-Ingénieur-Technik, 1973, 45(4), pages 217 à 219.

Dans le cas du traitement de solutions renfermant des espèces qui par réaction électrochimique se transforment en espèces solides, cas des ions métalliques réduits en métal, se déposant à la surface de l'électrode poreuse percolante et éventuellement également au sein de cette dernière, l'efficacité de l'électrode poreuse percolante diminue par suite d'un colmatage. Dans ce cas on peut envisager de régénérer l'électrode poreuse percolante colmatée, c'est-à-dire de la débarrasser du dépôt solide qu'elle renferme et de récupérer ledit dépôt. Une telle régénération peut être effectuée par voie mécanique avec récupération du dépôt sous forme d'un solide, ou par voie chimique ou électrochimique avec remise en solution du dépôt solide et récupération sous une forme ionique en solution concentrée. La régénération par voie mécanique est à envisager lorsque le dépôt solide, notamment dépôt métallique, est préférentiellement à la surface de l'électrode poreuse percolante, ladite régénération pouvant être réalisée par exemple par décrochage du produit déposé, notamment métal, par gravité en arrêtant l'alimentation en liquide de la cellule ou du réacteur électrochimique ou encore par raclage de la surface de l'électrode poreuse percolante en continu ou en discontinu. Pour effectuer une régénération chimique de l'électrode poreuse percolante colmatée on met en contact ladite électrode avec un volume minimal d'un réactif approprié pour dissoudre le solide déposé dans l'électrode et obtenir une solution concentrée du produit dissous dans ledit réactif. Par exemple dans le cas d'un dépôt de cuivre au sein de l'électrode poreuse percolante, on peut régénérer ladite électrode colmatée par le cuivre en immergeant cette électrode dans un volume minimal d'une solution aqueuse d'acide nitrique et on récupère le cuivre sous la forme d'une solution aqueuse de nitrate de cuivre très concentrée comparativement à l'effluent traité dans la cellule ou le réacteur électrochimique. Dans le cas d'une régénération électrochimique de l'électrode poreuse percolante colmatée par le dépôt solide, on réalise une remise en solution dudit dépôt par voie électrochimique en permutant les rôles joués par l'électrode poreuse percolante et la contre-électrode. Dans le cas d'un dépôt métallique cette remise en solution correspond à une oxydation électrochimique du métal déposé et pour ce faire on fait jouer à l'électrode poreuse percolante colmatée par le dépôt le rôle d'anode et à la contre-électrode le rôle de cathode. Lorsque l'on envisage une régénération électrochimique de l'électrode poreuse percolante colmatée, on peut en particulier effectuer la réaction électrochimique produisant le solide se déposant sur et/ou dans l'électrode poreuse percolante dans une cellule ou un réacteur électrochimique constitué d'une enceinte comportant une entrée dans sa partie médiane et une première et une deuxième sorties de part et d'autre de cette entrée, une première électrode poreuse percolante fixe montée dans l'enceinte entre l'entrée et l'une des sorties et une deuxième électrode poreuse percolante fixe entre ladite entrée et l'autre sortie, lesdites électrodes poreuses percolantes étant disposées dans l'enceinte de telle sorte

que la solution à traiter, circulant dans l'enceinte de l'entrée vers chacune des sorties, percole à travers chacune desdites électrodes, des moyens pour établir une différence de potentiel entre les électrodes, l'une des électrodes jouant le rôle d'anode et l'autre de cathode, et des moyens pour amener la solution à traiter et pour la faire circuler de l'entrée vers les sorties de l'enceinte. Une telle cellule est similaire à celle représentée schématiquement dans l'article de D. N. Bennion et J. Newman intitulé: "Electrochemical Removal of Copper Ions from Very Dilute Solutions" et publié dans Journal of Applied Electrochemistry 2 (1972), pages 113 à 122, avec toutefois utilisation d'électrodes poreuses percolantes modifiées suivant l'invention. Par exemple dans le cas d'un traitement d'une solution diluée d'ions métalliques, le métal se épose au sein de l'électrode poreuse percolante jouant le rôle de cathode, et pour régénérer la cathode chargée du métal déposé on permute le rôle joué par les électrodes en inversant leur polarité.

Dans le cas du traitement de solutions renfermant des ions de métaux différents ayant des potentiels d'électrodéposition suffisamment éloignés les uns des autres, on peut réaliser une récupération sélective desdits métaux en utilisant un montage en cascade de cellules ou réacteurs électrochimiques équipés d'électrodes poreuses percolantes suivant l'invention, chacune desdites cellules travaillant dans des conditions appropriées pour obtenir le dépôt d'un seul métal à la cathode, l'ordre de dépôt des métaux correspondant à celui de leurs potentiels d'électrodéposition rangés par valeurs croissantes.

Les conditions opératoires pour la mise en oeuvre de réactions électrochimiques, notamment électrodéposition de métaux à partir de solutions aqueuses renfermant en faibles concentrations, par exemple de 1 à 1000 p.p.m., ou en concentrations plus élevées des ions métalliques et en particulier des ions de métaux lourds, ou destruction de polluants organiques ou d'ions cyanures contenus dans des eaux résiduaires, ou encore synthèses électroorganiques, en faisant appel à des cellules ou des réacteurs électrochimiques équipés d'électrodes poreuses percolantes modifiées suivant l'invention, par exemple potentiel à imposer à l'électrode poreuse percolante ou différence de potentiel à établir entre les électrodes de la cellule ou du réacteur électrochimique utilisé, vitesse d'écoulement de la solution à traiter à travers l'électrode poreuse percolante, peuvent être définies dans chaque cas par l'homme de l'art sur la base des caractéristiques des solutions à traiter, des données électrochimiques connues dans la littérature ou déterminées expérimentalement concernant la réaction électrochimique à effectuer, et des caractéristiques de la cellule ou du réacteur électrochimique employé et de l'électrode poreuse percolante présente dans ladite cellule ou ledit réacteur. Ainsi le potentiel à imposer à l'électrode poreuse percolante ou à établir entre les électrodes du réacteur ou de la cellule électrochimique peut se déduire de la courbe intensité/potentiel déterminée expérimentalement pour la réaction à laquelle on s'intéresse effectuée dans le réacteur choisi, ou un réacteur de même géométrie, sur la solution à traiter. Le potentiel à imposer à l'électrode poreuse percolante correspond généralement à une valeur du potentiel choisie sur le palier du courant de diffusion limite, et le potentiel à établir entre les électrodes de la cellule ou du réacteur électrochimique est en relation avec cette valeur en tenant compte également de la chute ohmique dans la solution entre les électrodes. La vitesse de passage de la solution à traiter dans la cellule ou le réacteur électrochimique est choisie pour obtenir un rendement satisfaisant pour la réaction électrochimique que l'on effectue tout en évitant les phénomènes indésirables, par exemple le colmatage de l'électrode poreuse percolante dans le cas où la réaction électrochimique conduit à un dépôt solide au sein ou/et sur l'électrode poreuse percolante. Ces conditions opératoires correspondent sensiblement à celles utilisées pour réaliser la réaction électrochimique dans la cellule ou le réacteur électrochimique correspondant à celui utilisé suivant l'invention mais équipé d'une électrode poreuse percolante non modifiée.

L'invention est illustrée par les exemples suivants donnés à titre non limitatif.

Exemple 1

On imprégnait un disque d'un feutre de carbone commercial ayant 4 millimètres d'épaisseur au moyen d'un agent tensio-actif à base d'alcoylsulfates connu dans le commerce sous le nom de TEEPOL et présentant une valeur de HLB comprise entre 13 et 15.

Le feutre de carbone était formé de fibres d'un diamètre d'environ 10 $\mu$ et présentant les caractéristiques suivantes:

| | |
|---|---|
| — Teneur en carbone | :94 à 97% en poids |
| — Taux de cendres | :0,1 à 0,3% en poids |
| — Teneur en matières volatiles | :1,5 à 4% en poids |
| — Soufre | :0,3 à 0,5% en poids |
| — Résistance à l'oxydation (perte de poids après 48 heures à 350°C dans l'air) | :4 à 12% |
| — Surface spécifique | :0,5 à 1 $m^2/g$ |
| — Densité apparente à l'état mouillé par rapport à l'eau | :0,401 |

L'imprégnation était réalisée en immergeant le disque de feutre dans une solution aqueuse à 0,1% de l'agent tensio-actif, puis en le rinçant rapidement à l'eau distillée et en le laissant égoutter.

Le disque imprégné de l'agent tensio-actif présentait une densité apparente à l'état mouillé par rapport à l'eau ($\delta M$) égale à 1,03. Le rapport de la densité apparente $\delta M$ du feutre imprégné à l'état mouillé à la densité apparent $\delta O$ du feutre non imprégné à l'état mouillé était égal à 2,56.

Dans une cellule d'électrolyse pourvue d'une électrode poreuse percolante comportant la matrice poreuse fibreuse modifiée par imprégnation comme indiqué plus haut, c'est-à-dire le disque de feutre imprégné de l'agent tensio-actif, on traitait une solution aqueuse renfermant 500 p.p.m. d'ions cuivriques et 0,5 mole de sulfate de potassium pour en récupérer le cuivre par électrodéposition.

La cellule électrolytique utilisée consistait en une enceinte cylindrique verticale fermée à chacune de ses extrémités et munie à son extrémité inférieure d'une entrée pour la solution à traiter et à sa partie supérieure d'une sortie pour la solution épurée. L'électrode poreuse percolante formée par le disque de feutre imprégné de l'agent tensio-actif porté par un support en matière plastique renfermant un anneau de platine pour l'amenée de courant, ledit anneau étant en contact avec le disque, était disposée à l'intérieur de l'enceinte cylindrique au voisinage de son extrémité inférieure de manière à séparer ladite enceinte en un compartiment inférieur du côté de l'entrée de l'enceinte et en un compartiment supérieur du côté de la sortie de l'enceinte. L'électrode poreuse percolante jouait le rôle de cathode. Une électrode en platine était disposée dans le compartiment supérieur de la cellule et un pont salin de nitrate de potassium reliait ladite cellule à une électrode de référence au calomel. Chacune des électrodes était reliée à un potentiostat permettant d'imposer une tension électrique continue de valeur connue à la cathode et à l'anode. Un millivoltmètre permettait de mesurer la différence de potentiel entre la cathode et l'électrode de référence et un milliampèremètre était monté en série avec l'anode sur le circuit reliant cette anode au potentiostat. L'entrée de la cellule électrolytique était reliée, à travers une pompe péristaltique, à un réservoir contenant la solution à traiter.

On imposait à la cathode un potentiel d'électrolyse (réaction de réduction électrochimique des ions cuivriques en métal) égal à —300 millivolts (par rapport à l'électrode de référence), cette valeur étant déterminée sur la courbe intensité/potentiel établie expérimentalement pour la solution considérée et représentant le potentiel moyen de l'intervalle de potentiel correspondant au palier de la courbe définissant le courant de diffusion limite. La solution cuivrique était injectée dans la cellule d'électrolyse par la pompe péristaltique de telle sorte qu'elle percolait à travers l'électrode poreuse percolante et circulait dans ladite cellule avec une vitesse constante égale à $5,5\times10^{-5}$ mètre/seconde.

On déterminait en fonction du temps le rendement instantané R d'élimination du cuivre de la solution, ledit rendement étant défini par l'expression

$$R(\%)=\frac{Co-CL}{Co}\times100,$$

dans laquelle Co et CL désignent respectivement les concentrations en ions métalliques dans la solution à l'entrée et à la sortie de la cellule d'électrolyse.

Les résultats obtenus sont consignés dans le tableau I ci-après.

TABLEAU I

| t (heures) | 1 | 2 | 5 | 8 | 12 | 15 | 20 | 29 |
|---|---|---|---|---|---|---|---|---|
| R(%) | 97,5 | 95 | 81 | 68 | 57 | 54 | 51 | 50,5 |

Le rendement d'élimination est élevé pendant les deux premières heures (de l'ordre de 95%), puis il décroît quasi-linéairement pour se stabiliser au bout de la vingtième vers une valeur d'environ 50—51%.

En traitant une solution cuivrique ayant la composition précitée (500 p.p.m. d'ions cuivriques et 0,5 M en $K_2SO_4$) dans des conditions analogues mais en utilisant une électrode poreuse percolante ayant une matrice poreuse fibreuse constituée par le feutre non imprégné par l'agent tensio-actif, le rendement d'élimination initial avait une valeur égale à 30%, c'est-à-dire très inférieure aux valeurs obtenues suivant l'invention même après une durée importante du traitement.

Exemple 2

On répétait l'exemple 1 faisant appel à l'électrode poreuse percolante modifiée suivant l'invention, en modifiant toutefois le débit de la pompe péristaltique pour obtenir une vitesse de circulation de la solution cuivrique dans la cellule d'électrolyse égale à $1,98\times10^{-4}$ mètre/seconde.

On donne dans le tableau II suivant le rendement d'élimination en fonction du temps.

TABLEAU II

| t (heures) | 0,5 | 1,5 | 2,5 | 4 | 7 | 8,5 | 12 | 15 |
|---|---|---|---|---|---|---|---|---|
| R(%) | 97,5 | 91 | 88,5 | 82 | 56,5 | 50 | 45 | 45 |

Le rendement d'élimination est élevé au début de l'opération, puis il décroît à peu près linéairement pour se stabiliser à partir de la douzième heure à une valeur d'environ 45%.

En répétant cet essai dans des conditions analogues mais en utilisant une électrode poreuse percolante ayant une matrice poreuse fibreuse constituée par le feutre non imprégné par l'agent tensio-actif, le rendement d'élimination initial avait une valeur égale à 33%, c'est-à-dire notablement inférieure aux valeurs obtenues suivant l'invention même après une durée importante du traitement.

Exemple 3

On traitait une solution aqueuse 0,5 M de sulfate de potassium renfermant 1000 p.p.m. d'ions argent pour en récupérer l'argent par électrodéposition.

Pour ce faire on utilisait une cellule d'électrolyse à électrode poreuse percolante analogue à la cellule décrite dans l'exemple 1. Dans cette cellule, entre autres, la matrice poreuse fibreuse de l'électrode poreuse percolante était constituée par un disque d'épaisseur 4 millimètres du feutre défini dans l'exemple 1 et traité de la même manière par la solution aqueuse de l'agent tensio-actif. Le disque de feutre imprégné de l'agent tensio-actif présentait une densité apparente à l'état mouillé par rapport à l'eau ($\delta M$) égale à 1,02. Le rapport de la densité apparante $\delta M$ du feutre imprégné à l'état mouillé à la densité apparente $\delta O$ du feutre non imprégné à l'état mouillé était égal à 2,54.

On imposait à la cathode un potentiel d'électrolyse (réaction de réduction électrochimique des ions argent en métal) égal à —100 millivolts (par rapport à l'électrode de référence). La solution à traiter était injectée dans la cellule d'électrolyse à l'aide de la pompe péristaltique de telle sorte que ladite solution percolait à travers l'électrode poreuse percolante et circulait dans ladite cellule avec une vitesse constante égale à $1{,}98 \times 10^{-4}$ mètre/seconde.

Au bout de 4 heures le rendement d'élimination avait la valeur 88,4% et il était encore égal à 86,6% après une durée de 14 heures.

Exemple 4

On traitait une solution aqueuse 0,5 M de nitrate de potassium renfermant 1000 p.p.m. d'ions plomb ($Pb^{++}$) pour en récupérer le plomb par électrodéposition.

Pour ce faire on opérait dans une cellule d'électrolyse à électrode poreuse percolante identique à celle employée pour la mise en oevure de l'exemple 3.

On imposait à la cathode un potentiel d'électrolyse (réaction de réduction des ions plomb en métal) égal à —700 millivolts (par rapport à l'électrode de référence), et réglait le débit de la pompe péristaltique pour que la vitesse de circulation de la solution à traiter dans la cellule d'électrolyse fût égale à $1{,}98 \times 10^{-4}$ mètre/seconde.

Après 1,5 heure de traitement le rendement d'élimination du plomb était encore égal à 68,4%.

Exemple 5

On traitait une solution aqueuse renfermant 2,5 p.p.m. de cadmium et 5 p.p.m. de nickel sous forme ionique pour en récupérer lesdits métaux par électrodéposition.

Cette solution aqueuse constituait le surnageant d'un effluent aqueux industriel soumis à une décantation, ledit effluent ayant un pH compris entre 8,5 et 9.

On opérait dans une cellule d'électrolyse à électrode poreuse percolante identique à celle employée pour la mise en oeuvre de l'exemple 3.

On imposait entre anode et cathode une différence de potentiel égale à —2,3 volts at réglait le débit de la pompe péristaltique pour que la vitesse de circulation de la solution à traiter dans la cellule d'électrolyse fût égale à $1{,}84 \times 10^{-4}$ mètre/seconde.

L'effluent traité sortant de la cellule renfermait 0,05 p.p.m. de cadmium et 0,70 p.p.m. de nickel.

Les rendements d'élimination égaux à 98% dans le cas du cadmium et à 86% dans le cas du nickel au début de l'opération, conservaient encore ces valeurs au bout de 24 heures de traitement.

Exemple 6

Des disques d'un feutre de carbone commercial ayant les mêmes caractéristiques que le feutre défini dans l'exemple 1 mais possèdant une épaisseur de 10 millimètres, étaient imprégnés au moyen de l'agent tensio-actif de l'exemple 1 utilisé en solution aqueuse de concentration variable.

L'imprégnation était réalisée en immergeant les disques de feutre dans la solution aqueuse appropriée de l'agent tensio-actif, puis en les rinçant rapidement à l'eau distillée et en les laissant égoutter.

La densité apparente $\delta M$ de chaque disque imprégné à l'état mouillé et le rapport de ladite

densité à la densité apparente $\delta O$ du disque non imprégné à l'état mouillé est donnée dans le tableau III ci-après en regard de la concentration en agent tensio-actif de la solution aqueuse d'imprégnation.

TABLEAU III

| No. de l'essai | C* (%) | $\delta M$ | $\frac{\delta M}{\delta O}$ |
|---|---|---|---|
| I | 0,01 | 0,78 | 1,95 |
| II | 0,05 | 0,838 | 2,09 |
| III | 0,06 | 0,906 | 2,26 |
| IV | 0,08 | 0,99 | 2,47 |
| V | 0,1 | 1,03 | 2,56 |

*) C=concentration pondérale de l'agent tensio-actif dans la solution aqueuse d'imprégnation.

Dans une cellule d'électrolyse pourvue d'une électrode poreuse percolante du type de la cellule décrite dans l'exemple 1 et pour laquelle la matrice poreuse fibreuse de l'électrode poreuse percolante était formée par l'un des disques de feutre imprégnés de tensio-actif décrits ci-dessus, on traitait une solution aqueuse renfermant 1000 p.p.m. d'ions cuivriques et 0,5 mole de sulfate de potassium pour en récupérer le cuivre par électrodéposition.

On imposait à la cathode un potentiel d'électrolyse (réaction de réduction des ions cuivriques en métal) égal à —300 millivolts (par rapport à l'électrode de référence), et réglait le débit de la pompe péristaltique pour que la vitesse de circulation de la solution à traiter dans la cellule d'électrolyse fût égale à $1,98 \times 10^{-4}$ mètre/seconde.

On donne dans le tableau IV le rendement d'élimination initial $R_M$ pour chaque matrice poreuse fibreuse imprégnée utilisée pour constituer l'électrode poreuse percolante.

TABLEAU IV

| Matrice imprégnée | | |
|---|---|---|
| No. de l'essai | $\delta M/\delta O$ | $R_m$*) (%) |
| I | 1,95 | 92 |
| II | 2,09 | 95 |
| III | 2,26 | 96,5 |
| IV | 2,47 | 97,5 |
| V | 2,56 | 97,5 |

*) $R_M$=valeur de R au début de l'opération.

En opérant dans les mêmes conditions mais avec une électrode poreuse percolante comportant une matrice formée par le feutre de carbone non imprégné par l'agent tensio-actif, le rendement initial d'élimination était seulement égal à 33%.

Exemple 7

On imprégnait un disque d'un feutre de graphite commercial ayant 3,5 millimètres d'épaisseur au moyen d'une solution aqueuse à 0,1% en poids de l'agent tensio-actif utilisé dans l'exemple 1 en réalisant cette imprégnation comme indiqué dans ledit exemple 1.

Le feture de graphite était formé de fibres d'un diamètre d'environ 9 $\mu$ et présentait les caractéristiques suivantes:

— Teneur en carbone :>99%
— Taux de cendres :<0,1%
— Teneur en matières volatiles :<1%
— Soufre :<0,1%
— Résistance à l'oxydation (perte de poids après 48 heures à 350°C dans l'air) :<1%
— Densité apparente à l'état mouillé par rapport à l'eau :($\delta O$):0,412

Le disque imprégné de l'agent tensio-actif présentait une densité apparente à l'état mouillé par rapport à l'eau ($\delta M$) égale à 1,03. Le rapport $\delta M:\delta O$ était égal à 2,50.

Dans une cellule d'électrolyse pourvue d'une électrode poreuse percolante du type de la cellule décrite dans l'exemple 1 et pour laquelle la matrice poreuse fibreuse de l'électrode poreuse percolante était formée par le disque de feutre de graphite imprégné de l'agent tensio-actif, on traitait une solution aqueuse renfermant 1000 p.p.m. d'ions cuivriques et 0,5 mole de sulfate de potassium pour en récupérer le cuivre par électrodéposition.

On imposait à la cathode un potentiel d'électrolyse égal à —300 millivolts (par rapport à l'électrode de référence), et réglait le débit de la pompe péristaltique pour que la vitesse de circulation de la solution à traiter dans la cellule d'électrolyse fût égale à $1{,}98 \times 10^{-4}$ mètre/seconde.

Le rendement d'élimination initial $R_M$ était égal à 99,3%. En outre on constatait qu'en régime stationnaire, le rendement d'élimination du cuivre, lorsque la matrice de l'électrode poreuse percolante est un feutre de graphite imprégné, était plus élevé que celui obtenu, toutes les autres conditions étant égales par ailleurs, en utilisant une électrode poreuse percolante ayant une matrice constituée par un feutre de carbone imprégné du tensio-actif. Toutefois le colmatage de l'électrode poreuse percolante à matrice de feutre de graphite imprégné de tensio-actif était plus rapide comparé à celui de l'électrode poreuse percolante à matrice de feutre de carbone imprégné de tensio-actif.

Exemple 8

On traitait un effluent aqueux issu du dosage de la demande chimique en oxygène (D.C.O.) de l'eau, ledit effluent renfermant en poids 1700 p.p.m. d'ions $Hg^{++}$ et 850 p.p.m. d'ions $Ag^{+}$ pour en récupérer l'argent et le mercure par électrodéposition.

Le dosage de la demande chimique en oxygène de l'eau (dosage des matières oxydables contenues dans l'eau) consiste, dans son principe, à oxyder par un excès de dichromate de potassium, en milieu acide et à l'ébullition, lesdites matières oxydables en présence de sulfate d'argent (catalyseur d'oxydation) et de sulfate de mercure (agent complexant des chlorures), puis à déterminer l'excès de dichromate de potassium à l'aide d'une solution titrée de sulfate de fer divalent et d'ammonium.

Pour traiter l'effluent D.C.O. précité on utilisait une cellule électrolytique consistant en une enceinte cylindrique verticale fermée à chacune de ses extrémités, ladite enceinte possèdant à son extrémité inférieure une entrée pour l'effluent à traiter et sur sa surface latérale deux sorties pour l'effluent traité. Une cathode cylindrique ayant la forme d'une paroi poreuse cylindrique séparait l'enceinte cylindrique en une zone centrale, dans laquelle débouchait l'entrée de l'enceinte et une zone latérale communiquant avec les sorties pratiquées dans la surface latérale de l'enceinte. La séparation de l'enceinte en deux zones par la cathode est telle que le liquide arrivant dans la zone centrale par l'entrée de l'enceinte percole à travers la cathode poreuse pour passer dans la zone latérale et de 1à sortir de la cellule. Une anode est disposée dans la zone centrale à l'intérieur de la cathode et concentriquement à cette dernière. La cathode et l'anode sont formées chacune d'une matrice en feutre de carbone modifiée montée sur un support comportant des amenées de courant au feutre. La matrice modifiée consiste en un feutre de carbone, ayant les caractéristiques du feutre de carbone de l'exemple 1, imprégné de l'agent tensio-actif de l'exemple 1, la technique d'imprégnation étant analogue à celle définie dans ledit exemple. La matrice en feutre de carbone imprégné de l'agent tensio-actif présentait une densité apparente à l'état mouillé par rapport à l'eau ($\delta M$) égale à 1,03 et un rapport de ladite densité à la densité apparente à l'état mouillé par rapport à l'eau du feutre non imprégné ($\delta O$) égale à 2,56.

On établissait une différence de potentiel de —2,4 volts entre les électrodes et réglait le débit d'effluent D.C.O. à l'entrée de la cellule pour que la vitesse de circulation dudit effluent dans la cellule fût égale à $1{,}31 \times 10^{-5}$ mètre/seconde.

Le rendement d'élimination initial de l'argent s'élevait à 99% et celui de mercure à 98%.

Exemple 9

En utilisant une cellule électrolytique indentique à celle décrite dans l'exemple 3, on électrolysait une solution renfermant 1000 p.p.m. d'ions cuivriques et 0,5 mole de sulfate de potassium jusqu'à obtenir au sein de la cathode un dépôt de cuivre ayant une masse d'environ 8 grammes, puis on arrêtait l'amenée de la solution cuivrique.

On inversait ensuite la polarité des électrodes et établissait une différence de potentiel entre anode et cathode égale à 500 millivolts, et l'on faisait circuler alors dans la cellule, en sens inverse du sens de circulation de la solution initiale et avec une vitesse égale à $2{,}8 \times 10^{-5}$ mètre/seconde, une solution aqueuse 0,5 M de sulfate de potassium amenée à pH 1 par addition d'acide sulfurique. On réalisait ainsi une oxydation du dépôt de cuivre en ions cuivriques passant dans la solution circulant dans la cellule, et par là même une régénération électrochimique de l'électrode renfermant le dépôt de cuivre. Après une durée de régénération égale à 30 minutes, une partie du cuivre déposé sur l'électrode avait été dissous et la solution sortant de la cellule présentait une concentration en ions cuivriques égale à 7000 p.p.m.

Exemple 10

On réalisait la synthèse du paraaminophénol par électroréduction du paranitrophénol, en opérant dans une cellule électrochimique à électrode poreuse percolante suivant l'invention.

La cellule utilisée consistait en une enceinte cylindrique verticale fermée à chacune de ses extrémités et pourvue d'une entrée à son extrémité inférieure et d'une sortie à son extrémité supérieure. Une cathode poreuse percolante, formée d'une matrice poreuse fibreuse modifiée reposant sur un anneau de platine constituant l'amenée de courant, était disposée au voisinage de la partie inférieure de l'enceinte et divisait ladite enceinte en une zone inférieure communiquant avec l'entrée de l'enceinte et une zone supérieure communiquant avec la sortie de ladite enceinte, de telle sorte que le milieu réactionnel amené en écoulement forcé par l'entrée de l'enceinte dans la zone inférieure de cette dernière percolait à travers la cathode pour passer dans la zone supérieure et de 1à vers la sortie de l'enceinte. La matrice poreuse fibreuse modifiée de la cathode consistait en un disque de feutre de carbone imprégné d'un agent tensio-actif qui présentait les mêmes caractéristiques que le disque imprégné défini dans l'essai IV de l'exemple 6. Un pont salin constitué d'un capillaire rempli de gélatine saturée en $KNO_3$ reliait la zone supérieure de l'enceinte à une électrode au calomel saturé servant d'électrode de référence et une anode consistant en un disque de platine perforé, pour permettre le passage du milieu réactionnel et la mise en place de l'élément du pont salin présent dans l'enceinte, était disposée au-dessus de la cathode suivant une section transversale de l'enceinte. Les électrodes étaient connectées à un potentiostat, et un milliampèremètre était monté en série sur le circuit de l'anode entre cette dernière et le potentiostat tandis qu'un millivolmètre était monté en parallèle entre l'électrode de référence et la cathode. Le milieu réactionnel était amené à l'entrée de la cellule en écoulement forcé au moyen d'une pompe péristaltique.

Le milieu réactionnel utilisé consistait en une solution aqueuse à 10% en poids d'éthanol renfermant $5\times10^{-3}$ mole de paranitrophénol et 0,3 mole d'hydrogénophtalate de potassium jouant le rôle d'électrolyte, le pH de ladite solution ayant été amené à une valeur de 4,80 par addition de soude.

On imposait à la cathode un potentiel de −820 millivolts (par rapport à l'électrode de référence), cette valeur ayant été déterminée à partir de la courbe intensité/potentiel établie pour le paranitrophénol et correspondant sensiblement au potentiel moyen de l'intervalle de potentiel pour le palier de diffusion, et on injectait le milieu réactionnel dans l'enceinte avec un débit constant égal à 35,4 ml/heure.

Le rendement de transformation du paranitrophénol, défini par l'expression

$$R(\%)=\frac{Co-CL}{Co}\times 100,$$

dans laquelle Co et CL désignent respectivement les concentrations en paranitrophénol dans les milieux réactionnels entrant dans la cellule et sortant de ladite cellule, était égal à 97% au début de l'opération et conservait cette valeur tout au long de l'essai.

## Revendications

1. Electrode poreuse percolante fibreuse du type comportant une matrice poreuse fibreuse en carbone ou graphite, caractérisé en ce que ladite matrice est une matrice modifiée qui résulte de l'imprégnation d'une matrice poreuse fibreuse en carbone ou graphite par une solution renfermant 0,01% à 1% en poids d'un agent tensio-actif, de telle sorte que ladite matrice modifiée présente, à l'état mouillé, une densité apparente par rapport à l'eau ayant une valeur comprise entre 1,6 et 3 fois la valeur de la densité apparente par rapport à l'eau de la matrice non modifiée correspondante à l'état mouillé.

2. Electrode suivant la revendication 1, caractérisée en ce que la matrice modifiée présente, à l'état mouillé, une densité apparente par rapport à l'eau ayant une valeur allant de 1,8 à 2,7 fois la valeur de la densité apparente par rapport à l'eau de la matrice non modifiée correspondante à l'état mouillé.

3. Electrode suivant la revendication 1 ou 2, caractérisée en ce que l'agent tensio-actif imprégnant la matrice modifiée présente un nombre de HLB compris entre 5 et 20 et situé plus particulièrement entre 10 et 16.

4. Electrode suivant l'une des revendications 1 à 3, caractérisée en ce que la matrice poreuse fibreuse est un feutre en carbone ou graphite.

5. Application de l'électrode poreuse percolante fibreuse suivant l'une des revendications 1 à 4, à la récupération, par électrodéposition, des métaux contenus sous la forme ionique dans des solutions aqueuses, dans laquelle la solution aqueuse renfermant sous la forme ionique le ou les métaux à récupérer est amenée à percoler à travers l'électrode poreuse, ladite solution étant traversée par un courant électrique résultant de l'établissement d'une différence de potentiel entre ladite électrode poreuse percolante et une contre électrode.

6. Application suivant la revendication 5, caractérisée en ce que les métaux à récupérer par

électrodéposition sont des métaux lourds, et notamment cuivre, plomb, argent, or, mercure, cadmium et nickel.

7. Application suivant la revendication 5 ou 6, caractérisée en ce que l'électrode percolante poreuse colmatée par le dépôt métallique est soumise à une régénération effectuée notamment par voie mécanique, par voie chimique ou par voie électrochimique.

8. Application de l'électrode poreuse percolante fibreuse suivant l'une des revendications 1 à 4, à la destruction de polluants organiques ou d'ions cyanures contenus dans des eaux résiduaires, dans laquelle l'eau résiduaire renfermant les polluants organiques ou les ions cyanures est amenée à percoler à travers l'électrode percolante poreuse, ladite solution étant traversée par un courant électrique résultant de l'établissement d'une différence de potentiel entre ladite électrode percolante poreuse et une contre électrode.

9. Application de l'électrode poreuse percolante fibreuse suivant l'une des revendications 1 à 4, à la synthèse de produits organiques par un processus comportant une ou plusieurs réactions électrochimiques, dans laquelle une solution conductrice renfermant les composés générant lesdits produits organiques par le processus comportant une ou plusieurs réactions électrochimiques, est amenée à percoler à travers l'électrode percolante poreuse, ladite solution étant traversée par un courant électrique résultant de l'établissement d'une différence de potentiel entre ladite électrode percolante poreuse et une contre électrode.

## Patentansprüche

1. Faserige poröse Sickerelektrode, enthaltend eine faserige poröse Kohlenstoff- oder Graphitmatrize, dadurch gekennzeichnet, daß die Matrize eine durch Tränken einer faserigen porösen Kohlenstoff- oder Graphitmatrize mit einer 0,01 bis 1 Gewichtzprozent eines oberflächenaktiven Wirkstoffes enthaltenden Lösung entstandene modifizierte Matrize darstellt, wobei die relative Dichte zu Wasser der modifizierten Matrize in getränktem Zustand das 1,6- bis 3 fache der relativen Dichte zu Wasser der entsprechenden nichtmodifizierten Matrize in getränktem Zustand beträgt.

2. Elektrode nach Anspruch 1, dadurch gekennzeichnet, daß die relative Dichte zu Wasser der modifizierten Matrize in getränktem Zustand das 1,8- bis 2,7 fache der relativen Dichte zu Wasser der entsprechenden nichtmodifizierten Matrize in getränktem Zustand beträgt.

3. Elektrode nach Anspruch 1 oder 2, dadurch gekennzeichnet, daß der HLB-Wert des die modifizierte Matrize tränkenden oberflächenaktiven Wirkstoffes zwischen 5 und 20, vorzugsweise zwischen 10 und 16, liegt.

4. Elektrode nach einem der Ansprüche 1 bis 3, dadurch gekennzeichnet, daß die faserige poröse Matrize ein Kohlenstoff- oder Graphitfilz ist.

5. Verwendung der faserigen porösen Sickerelektrode nach einem der Ansprüche 1 bis 4 zur Wiedergewinnung der in Ionenform in wässrigen Lösungen enthaltenen Metalle durch elektrolytische Abscheidung, wobei die das oder die wiederzugewinnenden Metalle in Ionenform enthaltende wässrige Lösung zum Durchsickern durch die poröse Elektrode gebracht wird und die Lösung von einem durch Errichten eines Spannungsunterschiedes zwischen der porösen Sickerelektrode und einer Gegenelektrode entstehenden elektrischen Strom durchflossen wird.

6. Verwendung nach Anspruch 5, dadurch gekennzeichnet, daß die durch elektrolytische Abscheidung wiederzugewinnenden Metalle Schwermetalle, insbesondere Kupfer, Blei, Silber, Gold, Quecksilber, Cadmium und Nickel sind.

7. Verwendung nach Anspruch 5 oder 6, dadurch gekennzeichnet, daß die durch metallische Ablagerung verstopfte poröse Sickerelektrode insbesondere auf mechanischem, chemischem oder elektrochemischem Wege regeneriert wird.

8. Verwendung der faserigen porösen Sickerelektrode nach einem der Ansprüche 1 bis 4 zur Zersetzung organischer Verunreinigungen oder von in Abwässern enthaltenen Zyanidionen, wobei das die organischen Verunreinigungen oder die Zyanidionen enthaltende Abwasser zum Durchsickern durch die poröse Sickerelektrode gebracht wird und die Lösung von einem durch Errichten eines Spannungsunterschiedes zwischen der porösen Sickerelektrode und einer Gegenelektrode entstehenden elektrischen Strom durchflossen wird.

9. Verwendung der faserigen porösen Sickerelektrode nach einem der Ansprüche 1 bis 4 zur Synthese organischer Produkte mit Hilfe eines aus einer oder mehreren elektrochemischen Reaktionen bestehenden Verfahrens, wobei eine leitfähige Lösung, die zu diesen organischen Produkten mit Hilfe des aus einer oder mehreren elektrochemischen Reaktionen bestehenden Verfahrens führende Verbindungen enthält, zum Durchsickern durch eine poröse Sickerelektrode gebracht wird und die Lösung von einem durch Errichten eines Spannungsunterschiedes zwischen der porösen Sickerelektrode und einer Gegenelektrode entstehenden elektrischen Strom durchflossen wird.

## Claims

1. A fibrous percolating porous electrode comprising a fibrous carbon or graphite porous matrix, characterized in that said matrix is a modified matrix which results from the impregnation of a fibrous

carbon or graphite porous matrix with a solution containing 0.01% to 1% by weight of a surface-active agent so that the modified matrix has an apparent density in relation to water, in the wetted state, between 1.6 and 3 times the apparent density in relation to water of the corresponding non-modified matrix in the wetted state.

2. An electrode according to claim 1, characterized in that the modified matrix has an apparent density in relation to water, in the wetted state, ranging from 1.8 to 2.7 times the apparent density in relation to water of the corresponding non-modified matrix in the wetted state.

3. An electrode according to claim 1 or 2, characterized in that the HLB number of the surface-active agent which impregnates the modified matrix is between 5 and 20 and more particularly between 10 and 16.

4. An electrode according to any of claims 1 to 3, characterized in that the fibrous porous matrix is made of carbon or graphite felt.

5. Application of the fibrous percolating porous electrode according to any of claims 1 to 4, for recovering by electrodeposition metals contained in the form of ions in aqueous solutions, wherein the aqueous solution containing in the form of ions the metal or metals to be recovered is caused to percolate through the porous electrode while said solution is traversed by an electrical current resulting from the establishment of a potential difference between the percolating porous electrode and a counter electrode.

6. Application according to claim 5, characterized in that the metals to be recovered by electrodeposition are heavy metals, and more particularly copper, lead, silver, gold, mercury, cadmium and nickel.

7. Application according to claim 5 or 6, characterized in that the percolating porous electrode is regenerated when it becomes clogged by the metallic deposit, said regeneration being more particularly carried out mechanically, chemically or electrochemically.

8. Application of the fibrous percolating porous electrode according to any of claims 1 to 4, for destructing organic polluting agents or cyanide ions contained in waste waters, wherein the waste water containing the organic polluting agents or cyanide ions is caused to percolate through the percolating porous electrode while said solution is traversed by an electrical current resulting from the establishment of a potential different between the percolating porous electrode and a counter electrode.

9. Application of the fibrous percolating porous electrode according to any of claims 1 to 4, for synthesizing organic products by a process involving one or more electrochemical reactions, wherein a conducting solution containing the compounds able to generate said organic products by the process involving one or more electrochemical reaction is caused to percolate through the percolating porous electrode while said solution is traversed by an electrical current resulting from the establishment of a potential different between the percolating porous electrode and a counter electrode.